(19) Europäisches Patentamt
European Patent Office
Office européen des brevets

(11) EP 0 807 457 B1

(12) EUROPEAN PATENT SPECIFICATION

(45) Date of publication and mention of the grant of the patent:
**29.08.2001 Bulletin 2001/35**

(51) Int Cl.[7]: **B01D 53/64**, C02F 1/58, C02F 1/62, C01B 19/00

(21) Application number: **97107595.7**

(22) Date of filing: **07.05.1997**

(54) **Process for removing selenium from a selenium ion containing liquid**

Verfahren zum Entfernen von Selen aus einer Selenionen enthaltenden Flüssigkeit

Procédé pour éliminer le selenium d'un liquide contenant des ions selenium

(84) Designated Contracting States:
**BE DE FR GB**

(30) Priority: **13.05.1996 JP 11797096**

(43) Date of publication of application:
**19.11.1997 Bulletin 1997/47**

(73) Proprietor: **ASAHI GLASS COMPANY LTD.**
**Tokyo 100-8405 (JP)**

(72) Inventors:
- **Kijima, Takashi, Asahi Glass Company Ltd.**
  **Tsurumi-ku, Yokohama-shi, Kanagawa (JP)**
- **Takenaka, Atsuyoshi, Asahi Glass Company Ltd.**
  **Kanagawa-ku, Yokohama-shi, Kanagawa (JP)**
- **Matsui, Hiroyoshi, Asahi Glass Company Ltd.**
  **Tsurumi-ku, Yokohama-shi, Kanagawa (JP)**
- **Tabuchi, Rumiko, Asahi Glass Company Ltd.**
  **Tsurumi-ku, Yokohama-shi, Kanagawa (JP)**
- **Nagata, Takahisa, Asahi Glass Company Ltd.**
  **Tsurumi-ku, Yokohama-shi, Kanagawa (JP)**
- **Iwamoto, Masatoshi, Asahi Glass Company Ltd.**
  **Tsurumi-ku, Yokohama-shi, Kanagawa (JP)**

(74) Representative: **Müller-Boré & Partner**
**Patentanwälte**
**Grafinger Strasse 2**
**81671 München (DE)**

(56) References cited:
**DE-A- 19 639 444**
**US-A- 3 966 889**
**US-A- 4 405 464**
**US-A- 4 806 264**

- **DATABASE WPI Section Ch, Week 9416 Derwent Publications Ltd., London, GB; Class D15, AN 94-131467 XP002036407 & JP 06 079 286 A (MITSUBISHI MATERIALS CORP) , 22 March 1994**
- **DATABASE WPI Section Ch, Week 9631 Derwent Publications Ltd., London, GB; Class D15, AN 96-304706 XP002036406 & JP 08 132 074 A (ASAHI GLASS CO LTD) , 28 May 1996**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 807 457 B1

Printed by Jouve, 75001 PARIS (FR)

## Description

The present invention relates to a process for removing Se contained in a liquid which contains inorganic salts. Particularly, it relates to a process which is excellent in removing hexavalent Se which is hardly removable by conventional methods.

Figure 6 shows the flow of exhaust gas and the flow of an absorbing solution in an exhaust gas desulfurizer at a plant for producing glass containing Se.

Heavy oil combustion exhaust gas formed in a glass melting tank is cooled by a regenerative exhaust heat recovery system, and then a hazardous $SO_2$ component will be removed by an alkaline solution such as a NaOH solution in an absorption tower of an exhaust gas desulfurizer. At that time, Se in the exhaust gas will also be captured by the absorbing solution.

While being circulated in the exhaust gas desulfurization-absorption tower, the absorbing solution undergoes concentration of sulfates, sulfites, etc. However, since a part of the absorbing solution is purged, the concentration of inorganic salts in the absorbing solution becomes substantially constant under a stabilized operation condition. The absorbing solution having Se absorbed, will be supplied to a Se recovery system as shown in Figure 6, where the majority of Se is removed by precipitation, for example, by a method as disclosed in JP-B-52-23970, and then re-used as a glass material.

Other than JP-B-52-23970, many methods have heretofore been known for removal of Se in waste water. For example, in JP-A-55-99378 or JP-B-59-39517, Se is removed by means of an ion exchange resin. However, when $SeO_4^{2-}$ is to be adsorbed on an anion exchange resin, the difference in selectivity from co-existing $SO_4^{2-}$ is so small that the operation tends to be non-efficient with a concentrated aqueous solution of salts.

On the other hand, by a method of adding a ferric salt so that Se is adsorbed and coprecipitated with ferric hydroxide by hydrolysis, $SeO_3^{2-}$ can be removed to some extent, but $SeO_4^{2-}$ can not be substantially removed (see e. g. Merril et al., Field evaluation of arsenic and selenium removal by iron coprecipitation; Environmental Progress 6(2), May, 1987).

JP-B-48-30558 discloses a method wherein $Fe^{2+}$ is added to waste water containing $SeO_3^{2-}$ (tetravalent Se), then $Cu^{2+}$ is added thereto at pH 3 to 5 to promote oxidation and hydrolysis of $Fe^{2+}$ by $SeO_3^{2-}$, and further at pH 5 to 6, reduced Se is recovered together with a hydroxide of $Fe^{3+}$.

JP-A-5-78105 discloses a method wherein $BaCl_2$ is added to form a hardly soluble salt, and then $Fe^{2+}$ is added to coprecipitate remaining $SeO_3^{2-}$ in the form of a hardly soluble ferric salt.

JP-A-6-79286 discloses a method for removing Se from waste water containing $SeO_3^{2-}$ (tetravalent Se), $SeO_4^{2-}$ (hexavalent Se), $Cu^{2+}$ and suspended substances, which comprises first treatment of adding a neutralizing agent to remove the suspended substances and second treatment of adding an acid and a salt of $Fe^{2+}$ to coprecipitate a mixture of Se and iron hydroxide at pH 8.5 to 10.

This JP-A-6-79286 discloses that if the pH is lower than 8.5, added $Fe^{2+}$ tends to remain in the treated water, and on the other hand, if the pH is higher than 10, oxidation tends to proceed excessively whereby recovery of Se tends to be difficult.

In Examples given in this publication, the pH in the first treatment is from 8.9 to 9, and the pH in the second treatment is from 8.9 to 9.9. The liquid temperature is not disclosed. Therefore, the treatment is considered to be carried out substantially at room temperature. Further, the resulting iron hydroxide can be dissolved by an acid and re-used for the above second treatment.

Waste water from refining contains $Cu^{2+}$ ions. If such ions are in a small amount, they serve effectively for removal of Se ions, as disclosed in JP-B-48-30558. However, if they are in a concentration of 50 mg/ℓ or higher, they hinder reduction of Se ions. Therefore, excessive Cu is removed beforehand by forming a hardly soluble Ba salt in JP-A-5-78105 or by forming a hydroxide in JP-A-6-79286.

Furthermore, from US-A-48 06 264 a process for removing Se from an aqueous solution is known wherein said solution is contacted at a ph between 8 to 10 with ferrous ions as reducing agent.

From a glass melting tank for producing colored sheet glass such as heat-absorbing glass containing Se, a heavy oil combustion exhaust gas is discharged and supplied to a desulfurization system. This exhaust gas contains sulfur dioxide derived from the heavy oil and the glass material and Se oxide derived from the glass material. The desulfurization system may be either a wet system or a dry system. In an absorbing solution in a wet system desulfurization-absorption tower, inorganic salts of various types are formed due to Na ions added to absorb sulfur dioxide. The pH of the absorbing solution is preferably high for the purpose of absorbing $SO_2$, but preferably low for the purpose of not absorbing $CO_2$. Accordingly, the pH is usually determined taking into the two factors into consideration.

Table 1

| | |
|---|---|
| $Na_2SO_4$ | 10% |

Table 1 (continued)

| | |
|---|---|
| $Na_2SO_3$ | 6% |
| $NaHSO_3$ | 4% |
| $Na_2S_2O_3$ | 0.6% |
| Total sodium sulfates calculated as $Na_2SO_4$ | 20.0% |

The above Table 1 shows an example of components contained in an absorbing solution from an exhaust gas desulfurization-absorption tower of a glass melting tank.

Here, if 1% of sodium sulfite ($Na_2SO_3$) is completely oxidized to form sodium sulfate ($Na_2SO_4$), 1.13% of $Na_2SO_4$ will be formed by the reaction represented by

$$Na_2SO_3+1/2O_2 \rightarrow Na_2SO_4.$$

Likewise, from 1% of sodium hydrogen sulfite ($Na_2HSO_3$), 0.68% of $Na_2SO_3$ will be formed by the reaction represented by

$$2NaHSO_3+1/2O_2 \rightarrow Na_2SO_4+SO_2+H_2O,$$

and from 1% of sodium thiosulfate ($Na_2S_2O_3$), 0.90% of $Na_2SO_4$ will be formed by the reaction represented by

$$Na_2S_2O_3+3/2O_2 \rightarrow Na_2SO_4+SO_2.$$

Namely, the waste water from the absorption tower in a glass production plant usually contains about 20% of total sodium sulfates, as calculated as $Na_2SO_4$. This concentration varies depending upon the operation conditions including the type of the fuel oil, the amount of exhaust gas, the liquid-gas ratio in the absorption tower and the purge proportion of the absorbing solution, and the concentration given above should be understood as a typical example.

Among substances which hinder reduction of Se, heavy metal ions such as Cu can readily be removed by conventional precipitation treatment. On the other hand, inorganic salts such as sodium sulfates which hinder reduction of Se like Cu, are difficult to reduce their total concentration. Therefore, even if the method disclosed in JP-A-5-78105 or JP-A-6-79286 is applied to the above-mentioned highly concentrated salt solution containing no Cu, inorganic salts still remaining after removal of the heavy metals will hinder reduction of Se, whereby especially hexavalent ions of Se can not adequately be removed.

Figure 7 shows the results of investigation of the removal ratio of Se by bivalent iron when the concentration of sodium sulfate is varied in the liquid from which Se is to be removed. It is evident that the removal ratio of Se decreases as the concentration of sodium sulfate increases.

It is an object of the present invention to adequately remove Se, especially hexavalent Se, in a highly concentrated aqueous solution of salts, which used to be difficult to remove by the prior art.

The present invention provides a process for removing Se from a Se-ions-containing liquid, which comprises a reduction step of introducing a reducing agent containing ferrous ions to the Se-ions containing liquid, a first holding step of holding the pH of the liquid at a level of from 7 to 13, a second holding step of holding the pH of the liquid at a level of from 5 to 11, which is lower by at least 2 than the pH of the Se-ions-containing liquid in the first holding step, and a removing step of removing reduced Se from the liquid.

In the accompanying drawings:

Figure 1 is a block diagram showing the flow of the exhaust gas and waste water around the exhaust gas desulfurization-absorption tower of the glass melting furnace of the present invention.

Figure 2 is a graph showing the influence of the pH operational condition over the Se removal ratio.

Figure 3 is a graph showing the influence of the pH over the Se removal ratio.

Figure 4 is a graph showing the influence of the liquid temperature over the Se removal ratio.

Figure 5 is a graph showing the influence of the $Na_2SO_3$ concentration over the Se removal ratio.

Figure 6 is a block diagram showing the flow of the exhaust gas and waste water around the exhaust gas desulfurization-absorption tower of a conventional glass melting furnace.

Figure 7 is a graph showing the influence of the $Na_2SO_4$ concentration over the Se removal ratio.

Now, the present invention will be described in detail with reference to the preferred embodiments.

The process for removing Se of the present invention is applicable to a Se-ions-containing liquid which contains e.g. sulfates, sulfites, chlorides, nitrates or nitrites, as inorganic salts. However, it is particularly effectively applicable to a waste liquid in which sodium sulfate or sodium sulfite is co-existent with Se in a high concentration (at least 5 wt%), like an absorbing solution obtained by absorbing sulfur dioxide in combustion exhaust gas with an aqueous alkaline solution.

Among Se ions in waste water, those in the form of tetravalent ions can relatively easily be removed. Whereas, those in the form of hexavalent ions are chemically inactive and stable and thus can hardly be reduced. Especially in a concentrated aqueous solution of salts, Se tends to remain in the form of hexavalent ions, whereby solid-liquid separation is very difficult.

As mentioned above, the absorbing solution from an exhaust gas desulfurization-absorption tower of a glass melting furnace contains sodium salts such as $Na_2SO_4$, $NaHSO_3$, $Na_2SO_3$ and $Na_2S_2O_3$, in an amount of about 20 wt% as calculated as $Na_2SO_4$. According to the present invention, ionized Se, particularly hexavalent Se which is normally hardly removable, can effectively be reduced and can be removed by solid-liquid separation, from a highly concentrated aqueous solution of salts. The present invention is particularly suitable for removing Se from a Se-ions-containing liquid in which Se ions are at least 1 mg/ℓ, and the concentration of hexavalent Se ions is at least 0.5 mg/ℓ.

Figure 1 shows a flow diagram of a conventional plant for treating an absorbing solution from an exhaust gas desulfurizer, in which an apparatus for the process of the present invention is installed. In a continuous system, two or more reaction tanks are connected, and a stirrer is installed in each of them.

In the first reaction tank, the pH is adjusted to be from 7 to 13, and the liquid temperature is set preferably at a level of 80°C. To adjust the liquid temperature, a common method may be employed such as immersion heating or steam heating. A reducing agent such as an aqueous iron sulfate solution is supplied by a quantitative pump from its exclusive storage tank. The feeding rate is determined by calculation so that a constant concentration of the reducing agent to the flow rate of the waste liquid to be treated, can be realized.

The reducing agent to be used in the present invention contains ferrous ions, i.e ferrous sulfate or ferrous chloride. It is particularly preferred to employ a readily available ferrous aqueous solution. Further, with a view to recovering $Na_2SO_4$ in a subsequent step and re-using it as a material of glass or the like, it is preferred to employ an aqueous ferrous sulfate solution.

In the present invention, firstly, in the first reaction tank (the reaction in this first reaction tank will be hereinafter referred to as the first reaction, and the reaction in the second reaction tank will be hereinafter referred to as the second reaction), a reducing agent represented by ferrous ions, is added to the liquid. Then, a pH-controlling agent, preferably sodium hydroxide, is added to adjust the pH so that it will be within a range of from 7 to 13. The order of the pH adjustment and addition of the reducing agent may be reversed.

The first reaction tank is alkaline. Accordingly, when ferrous ions are added as a reducing agent, they become iron hydroxide and will precipitate in the liquid, whereby a reduction reaction will be carried out. When the added iron is in a large amount, the entire liquid tends to be a slurry, but stirring may be continued in that state to continue the reaction.

The reduction reaction is considered to proceed as follows:

$$Fe^{2+}+Fe(OH)_2+SeO_4^{2-}\rightarrow Fe(OH)_3,FeOOH,Fe_3O_4+Se^0$$

Namely, $Se^{6+}$ is reduced to $Se^{4+}$ by the reducing power of $Fe^{2+}$ slightly dissociated from ferrous hydroxide, and $Se^{4+}$ as an intermediate product will immediately be reduced to metal Se. Here, $Fe(OH)_2$ co-existent in a large amount, is considered to provide active sites.

Now, the influence of the pH over the reduction reaction of $Se^{6+}$ in the first reaction tank, will be described.

Figure 3 is a graph showing the removal ratio of Se against the pH on the abscissa. The concentration of Fe as the reducing agent was 2,500 ppm. It is evident that the Se removal ratio becomes highest in the vicinity of pH 10.5. Accordingly, the pH in the first reaction tank of the present invention is from 7 to 13, preferably from 8 to 12, more preferably from 10 to 11. If the pH is less than 7, the reducing action of the ferrous ions tends to be low, and it tends to be difficult to reduce hexavalent Se in the waste water. If the pH is too high, the solubility of ferrous hydroxide tends to below, whereby effective ferrous ions will decrease, and the treating speed will be low.

As is apparent from Figure 3, the removal ratio will not be 0 even if the pH is around the above range. However, in a case where a high Se removal ratio at a level of 99.7% is required, it is particularly preferred to adjust the pH in the first reaction tank within a range of from 10 to 11.

In the case of treating a Se-ions-containing liquid in which the concentration of inorganic salts is not so high as exceeding 5% and the Se concentration is at most 10 mg/ℓ, only the reaction in the first reaction tank may be carried out, and, if necessary, a flocculating agent may be added to precipitate Se and heavy metals in the waste liquid which are then recovered as sludge by a filter of the next step, whereby a Se removal ratio of at least 90% will be obtained.

However, such treatment is inadequate in a case where the liquid to be treated is a concentrated aqueous solution containing a large amount of inorganic salts and it is required to reduce the Se concentration to a level of not more than the regulated discharge standard value (0.1 mg/ℓ) at the outlet of the treating tank, which is expected to be enforced in future. As shown in Figure 2 which will be described hereinafter, by such treatment, if the initial concentration of Se ions in the Se-containing liquid is 30 mg/ℓ, the Se concentration can be lowered to a level of 1 mg/ℓ by maintaining the liquid in the reaction tank for one hour, but the concentration will not be substantially lowered thereafter. Even in this case, the removal ratio is about 96.7%, which is not so low as common waste water treatment. However, to meet the above-mentioned discharge standard at the outlet of the treatment equipment, a removal ratio of 99.7% is required. By a method of maintaining the pH at a constant level, it is difficult to reduce the Se concentration in the liquid to a level of not higher than the above-mentioned discharge standard value within a practical residence time, even if the concentration of the reducing agent is increased.

As a result of an extensive study, the present inventors have found that when the first stage treatment at a relatively high pH is followed by a second stage treatment at a pH lower by at least about 2 than the first stage, the concentration of Se remaining in the highly concentrated aqueous solution of salts can be remarkably lowered.

The result is shown in Figure 2. Referring to Figure 2, when the amount of iron sulfate as a reducing agent is 6,000 mg/ℓ as a concentration of iron, the pH is adjusted at 11 for the first 10 minutes, and upon expiration of 10 minutes, sulfuric acid is added to reduce the pH to 8, whereby in the initial stage of the reaction, the removal ratio of Se is rather poor as compared with the case where the pH is maintained at 11 or 8 from the very beginning, but upon expiration of about 40 minutes, the position is reversed, and finally the removal ratio will reach to a level of at most 0.1 mg/ℓ.

Figure 2 shows that the final removal ratio is higher in the case of pH 8 constant than in the case of pH 11 constant. However, in a separate experiment conducted by changing the feed liquid, the removal ratio was higher in the case of pH 11 than in the case of pH 8. Namely, when the pH is maintained at a constant level, the Se removal ratio tends to be hardly stabilized, and the results tend to vary due to a slight change in the experimental conditions. Whereas, it is possible to improve the Se removal ratio constantly by initially maintaining the pH at a high level and subsequently lowering it.

The reason is not clear as to why the Se concentration in the treated liquid can remarkably be lowered when the pH is changed at an intermediate point of the reaction as in the present invention. However, bivalent iron ions are considered to have a large power for reducing $Se^{6+}$, as they have a low reducing potential on an alkaline side. On the other hand, when the pH is lowered, the reducing power will be small, but the reaction is considered to proceed quickly as the concentration of free bivalent ions of iron increases.

If the pH is lowered from the beginning, the reducing power is small, and a high removal ratio can not be expected, although free bivalent ions may increase. It is believed advisable that as in the present invention, the reducing power is maintained at a high level when the absolute amount of $Se^{6+}$ is large, and when the absolute amount has decreased, free bivalent iron is increased to accelerate the reaction. Namely, in treating hexavalent Se in a concentrated aqueous solution of inorganic salts, the pH is initially maintained at a high level of about 10.5 to increase the reducing potential of the reducing agent, and then the pH is lowered by at least 2 than the initial stage to a level of from 5 to 11, preferably from 7 to 9 to increase free bivalent iron ions, whereby the Se removal ratio can be increased as a whole. The change in the pH is at least 2, preferably from 2 to 3.

The residence time in the first reaction tank is preferably about 10 minutes in a case where iron shown in Figure 2 is 6,000 mg/ℓ in order to secure the state of $Fe^{2+}$ which will be a driving force for reducing $Se^{6+}$. Then, the residence time in the second reaction tank is preferably about 50 minutes. As the concentration of iron is decreased, the residence time in each tank should preferably be prolonged. Inversely, the residence time can be shortened by increasing the concentration of iron.

Namely, the reaction time for the first or second reaction may be varied depending upon the iron concentration. If the iron concentration is 6,000 mg/ℓ, the residence time for the first reaction is 10 minutes, and the residence time in the second reaction is from 60 to 90 minutes, whereby about 30 mg/ℓ of $Se^{6+}$ in the waste liquid containing about 20% of sulfates, can be reduced to metal Se, which can then be separated out of the system by filtration or precipitation in the subsequent step. If 10,000 mg/ℓ of iron is added, the second reaction may be completed in about 30 minutes, but the amount of the resulting sludge will correspondingly increase. Accordingly, so long as the reaction tank will be not so large, the iron concentration is preferably adjusted to be low. If a sufficient amount of iron is added, the fist reaction can be carried out in 30 seconds, and the second reaction can be carried out in 20 minutes, at the shortest.

The type of the product to be produced by a glass melting furnace is not limited to the one containing Se. It is rather comon that the product does not contain Se as a colorant. When the type of the product is changed in the glass melting furnace from the one not containing Se to the one containing Se, the Se concentration in the absorbing solution in the absorption tower changes substantially for a few days until the change has been set.

When the concentration of the feed liquid to be treated is changeable like this, or when a product of a type having a high concentration of Se is to be produced even after completion of the change, the amount of iron to be supplied for the waste water treatment according to the present invention is preferably set at a high level of about 6,000 mg/ℓ. When the process is stabilized, and the Se concentration in the feed liquid to be treated by the waste water treatment has become substantially constant, the concentration of iron may be reduced to a level of from 1,000 to 2,000 mg/ℓ in order to reduce the amount of the resulting sludge.

The temperature of the Se-ions-containing liquid is preferably maintained at a level of from 50 to 95°C during the treatment. If this temperature is lower than 50°C, the reaction does not substantially proceed. The higher the temperature the better. However, from the practical viewpoint, the temperature is preferably within a range of from 70 to 95°C, more preferably about 80°C. Each of the above-mentioned experiments was carried out at a liquid temperature of 80°C.

Figure 4 shows the influence of the temperature of the Se-ions-containing liquid during the treatment. Figure 4 shows the results obtained in a case where ferrous sulfate was added as a reducing agent at an iron concentration of 6,000 ppm to the feed liquid containing 56.5 ppm of Se (of which 38.1 ppm was hexavalent Se), the first reaction was carried out at pH 11 for a residence time of one minute, and the second reaction was carried out at pH 8 for a residence time of one hour.

Further, the present inventors have found that sulfite ($SO_3^{2-}$) ions are one of the substances which hinder the reaction for reducing $Se^{6+}$. The test example is shown in Figure 5. Figure 5 shows the Se removal ratio against the concentration of $Na_2SO_3$ on the abscissa in a case where the liquid was maintained at a liquid temperature of 80°C at a pH of from 10.5 to 11 for one hour in a state where $Na_2SO_4$ was not contained. The initial concentration of Se was 50 ppm, and the experiments were conducted with respect to two cases where the concentration of iron as a reducing agent was 2,500 ppm and 1,000 ppm respectively.

As preliminary treatment in the first reaction tank, it is preferred to oxidize $SO_3^{2-}$ in the liquid to be treated to $SO_4^{2-}$ as far as possible, for example, by blowing air thereto or by adding an oxidizing agent. If this pretreatment is applied to the Se-ions-containing liquid having the composition as identified in the upper portion in Table 1, the liquid will be a Se-ions-containing liquid which contains $Na_2SO_4$ in substantially the same concentration as the total sodium sulfates as disclosed in the lower portion of Table 1. From this viewpoint, the above-mentioned Figure 2 represents a case where the liquid is free from $Na_2SO_3$, and Figure 3 represents a case where the actual absorbing solution from an exhaust gas desulfurization-absorption tower is sufficiently oxidized by air to reduce the amount of reducible substances in the liquid to a level of at most 100 mg/ℓ as an iodine consumption as prescribed in JIS K0211.

In the foregoing, the process has been described with respect to a continuous system, but the present invention is not limited thereto. For example, the process of the present invention can be carried out by a batch-system. Further, so long as the effects of the present invention can be obtained, various conventional methods may be used in combination.

Now, the present invention will be described in further detail with reference to Examples. However, it should be understood that the present invention is by no means restricted to such specific Examples.

EXAMPLES

An actual waste liquid from an absorption tower was subjected to treatment for removing Se by a continuous system using a waste liquid treating installation of an exhaust gas desulfurization-absorption tower of a glass melting furnace as shown in Figure 1. The amount of the feed liquid was 0.25 $m^3$/hr, in which the concentration of sodium sulfates as calculated as $Na_2SO_4$ was 20.8 wt%, the iodine consumption as prescribed in JIS K0211 was 200 ppm, and the pH was in a neutral region.

Further, in adopting a system wherein a high temperature exhaust gas from the glass melting furnace was brought in contact with an absorbing solution, an oxidation reaction heat due to blowing air into the oxidation tower, was added, whereby the liquid temperature of the feed liquid was about 60°C at the inlet of the reaction tank. To carry out the reaction at 80°C, a temperature controlling meter (an electrical heater) was used for each of the two reaction tanks. Further, the pH controlling meter was installed in each of the two reaction tanks.

As a reducing agent, ferrous sulfate was added so that the iron concentration became 6,000 ppm. The capacity of each of the two reaction tanks was 250ℓ, and the residence time of the waste liquid was one hour in each case, and the liquid temperature was 80°C in each case. The results are shown in Table 2.

Table 2

| | Se concentration at the inlet of the first reaction tank | pH in the first reaction tank | pH in the second reaction tank | Se concentration at the inlet of the second reaction tank |
|---|---|---|---|---|
| Example | 30 mg/ℓ | 10.5 | 8.0 | 0.05 mg/ℓ |

Table 2 (continued)

| | Se concentration at the inlet of the first reaction tank | pH in the first reaction tank | pH in the second reaction tank | Se concentration at the inlet of the second reaction tank |
|---|---|---|---|---|
| Comparative Example 1 | 30 mg/ℓ | 10.5 | 10.5 | 0.45 mg/ℓ |
| Comparative Example 2 | 30 mg/ℓ | 8.0 | 8.0 | 0.38 mg/ℓ |

As described in the foregoing, according to the process for removing Se of the present invention, Se can be removed from a concentrated solution of salts to a level of not higher than the discharge standard value, and thus the present invention serves for preservation of the environment. The present invention is particularly effective in that hexavalent Se which is normally hardly removable, can efficiently be removed.

## Claims

1. A process for removing Se from a Se-ions-containing liquid, which comprises a reduction step of introducing a reducing agent containing ferrous ions to the Se-ions-containing liquid, a first holding step of holding the pH of the liquid at a level of from 7 to 13, a second holding step of holding the pH of the liquid at a level of from 5 to 11, which is lower by at least 2 than the pH of the Se-ions-containing liquid in the first holding step, and a removing step of removing reduced Se from the liquid.

2. The process for removing Se from a Se-ions-containing liquid according to claim 1, wherein the liquid temperature in each of the first and second holding steps is from 50 to 95°C.

3. The process for removing Se from a Se-ions-containing liquid according to claim 1 or 2, wherein the Se-ions-containing liquid contains at least 0.5 mg/ℓ of hexavalent Se ions.

4. The process for removing Se from a Se-ions-containing liquid according to claim 1, 2 or 3, wherein the reducing agent is ferrous sulfate in a solid state or in an aqueous solution state, and the iron ion concentration in the Se-ions-containing liquid after the introduction of the reducing agent is at least 1,000 mg/ℓ.

5. The process for removing Se from a Se-ions-containing liquid according to claim 1, 2, 3 or 4, wherein the residence time of the Se-ions-containing liquid in the first holding step is at least 30 seconds, and the residence time of the liquid in the second holding step is at least 20 minutes.

6. The process for removing Se from a Se-ions-containing liquid according to claim 1, 2, 3, 4 or 5, wherein at least prior to the first holding step, the Se-ions-containing liquid is subjected to oxidation treatment by an addition of air or an oxidizing agent.

7. The process for removing Se from a Se-ions-containing liquid according to claim 1, 2, 3, 4, 5 or 6, wherein the Se-ions-containing liquid is an absorbing solution from an exhaust gas desulfurizer for combustion exhaust gas.

## Patentansprüche

1. Verfahren zum Entfernen von Selen aus einer Se-Ionen enthaltenden Flüssigkeit, welches einen Reduktionsschritt unter Einbringen eines Eisen(II)-ionen enthaltenden Reduktionsmittels zu der Se-Ionen enthaltenden Flüssigkeit, einen ersten Halteschritt unter Halten des pH-Wertes der Flüssigkeit auf einem Niveau von 7 bis 13, einen zweiten Halteschritt unter Halten des pH-Wertes der Flüssigkeit auf einem Niveau von 5 bis 11, welcher mindestens um 2 niedriger als der pH-Wert der Se-Ionen enthaltenden Flüssigkeit im ersten Halteschritt ist, und einen Entfernungsschritt unter Entfernen von reduziertem Se aus der Flüssigkeit umfaßt.

2. Verfahren zum Entfernen von Se aus einer Se-Ionen enthaltenden Flüssigkeit gemäß Anspruch 1, wobei die Flüssigkeitstemperatur in jedem des ersten und zweiten Halteschritts 50 bis 95° beträgt.

3. Verfahren zum Entfernen von Se aus einer Se-Ionen enthaltenden Flüssigkeit gemäß Anspruch 1 oder 2, wobei die Se-Ionen enthaltende Flüssigkeit mindestens 0,5 mg/l sechswertige Se-Ionen enthält.

4. Verfahren zum Entfernen von Se aus einer Se-Ionen enthaltenden Flüssigkeit gemäß Anspruch 1, 2 oder 3, wobei das Reduktionsmittel Eisen(II)sulfal in festem Zustand oder im Zustand einer wässerigen Lösung ist und die Eisenionen-Konzentration in der Se-Ionen enthaltenden Flüssigkeit nach dem Einbringen des Reduktionsmittels mindestens 1.000 mg/l beträgt.

5. Verfahren zum Entfernen von Se aus einer Se-Ionen enthaltenden Flüssigkeit gemäß Anspruch 1, 2, 3 oder 4, wobei die Verweilzeit der Se-Ionen enthaltenden Flüssigkeit im ersten Halteschritt mindestens 30 Sekunden beträgt und die Verweilzeit der Flüssigkeit im zweiten Halteschritt mindestens 20 Minuten beträgt.

6. Verfahren zum Entfernen von Se aus einer Se-Ionen enthaltenden Flüssigkeit gemäß Anspruch 1, 2, 3, 4 oder 5, wobei mindestens vor dem ersten Halteschritt die Se-Ionen enthaltende Flüssigkeit einer Oxidationsbehandlung durch Zugabe von Luft oder einem Oxidationsmittel unterworfen wird.

7. Verfahren zum Entfernen von Se aus einer Se-Ionen enthaltenden Flüssigkeit gemäß Anspruch 1, 2, 3, 4, 5 oder 6, wobei die Se-Ionen enthaltende Flüssigkeit eine Absorptionslösung aus einer Vorrichtung zum Abgasentschwefeln für Verbrennungsabgas ist.

**Revendications**

1. Procédé pour éliminer du Se à partir d'un liquide contenant des ions Se, qui comprend une étape de réduction qui consiste à introduire un agent de réduction contenant des ions ferreux dans le liquide contenant des ions Se, une première étape de maintien qui consiste à maintenir le pH du liquide à un niveau de 7 à 13, une seconde étape de maintien qui consiste à maintenir le pH du liquide à un niveau de 5 à 11, qui est inférieur d'au moins 2 au pH du liquide contenant des ions Se dans la première étape de maintien, et une étape d'élimination qui consiste à éliminer le Se réduit du liquide.

2. Procédé pour éliminer du Se à partir d'un liquide contenant des ions Se selon la revendication 1, dans lequel la température du liquide dans chacune des première et seconde étapes de maintien est de 50 à 95°C.

3. Procédé pour éliminer du Se à partir d'un liquide contenant des ions Se selon la revendication 1 ou 2, dans lequel le liquide contenant des ions Se contient au moins 0,5 mg/l d'ions Se hexavalents.

4. Procédé pour éliminer du Se à partir d'un liquide contenant des ions Se selon la revendication 1, 2 ou 3, dans lequel l'agent de réduction est du sulfate ferreux à l'état solide ou à l'état de solution aqueuse, et la concentration des ions fer dans le liquide contenant des ions Se après introduction de l'agent de réduction est d'au moins 1000 mg/l.

5. Procédé pour éliminer du Se à partir d'un liquide contenant des ions Se selon la revendication 1, 2, 3 ou 4, dans lequel le temps de séjour du liquide contenant des ions Se dans la première étape de maintien est d'au moins 30 secondes, et le temps de séjour du liquide dans la seconde étape de maintien est d'au moins 20 minutes.

6. Procédé pour éliminer du Se à partir d'un liquide contenant des ions Se selon la revendication 1, 2, 3, 4 ou 5, dans lequel, au moins avant la première étape de maintien, le liquide contenant des ions Se est soumis à un traitement d'oxydation par un ajout d'air ou d'un agent oxydant.

7. Procédé pour éliminer du Se à partir d'un liquide contenant des ions Se selon la revendication 1, 2, 3, 4, 5 ou 6, dans lequel le liquide contenant des ions Se est une solution absorbante provenant d'un appareil de désulfuration des gaz brûlés pour gaz brûlés de combustion.

# FIGURE 1

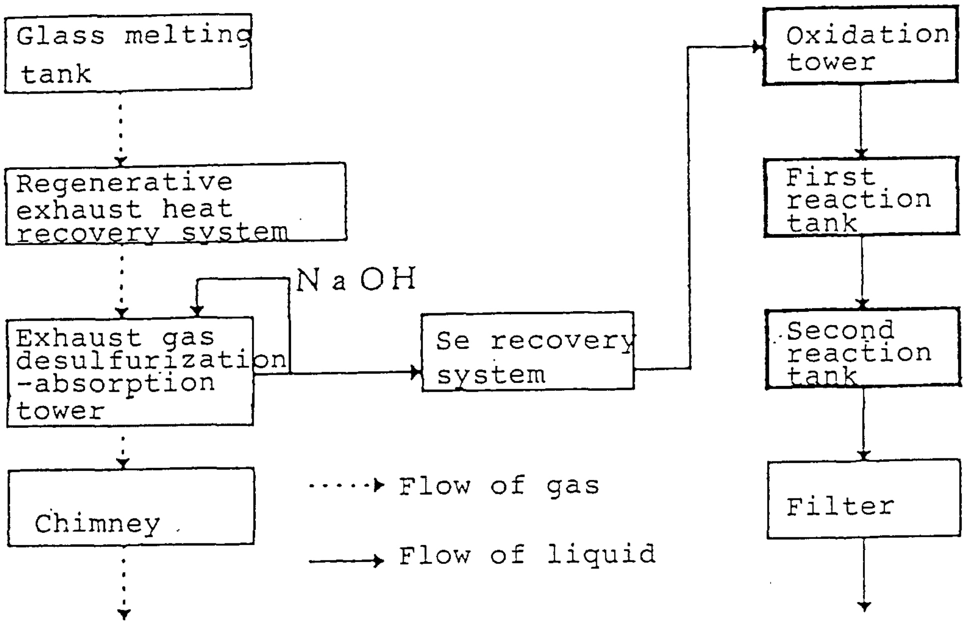


# FIGURE 2

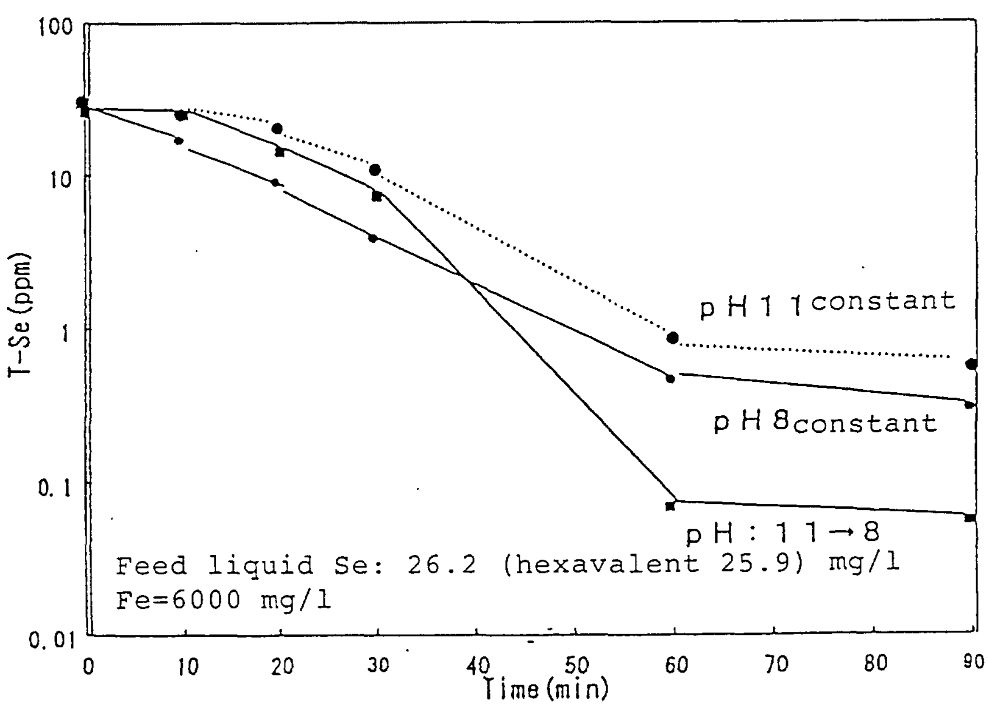

# FIGURE 3

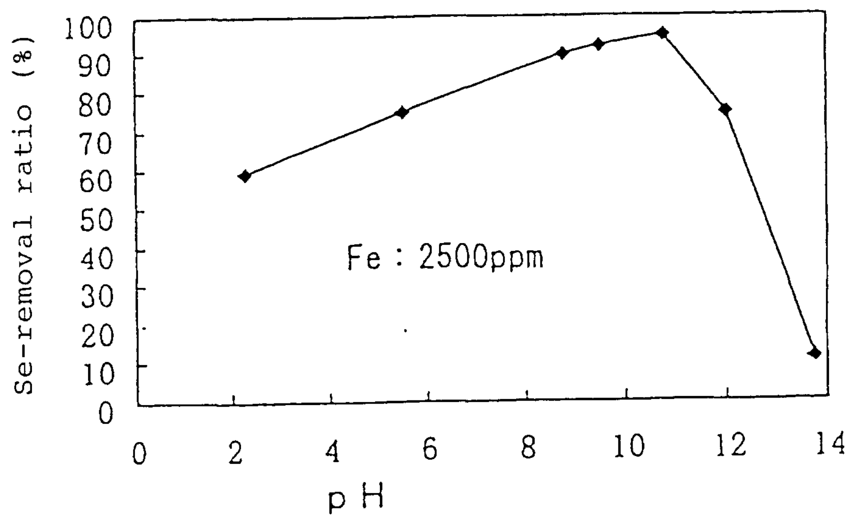


# FIGURE 4

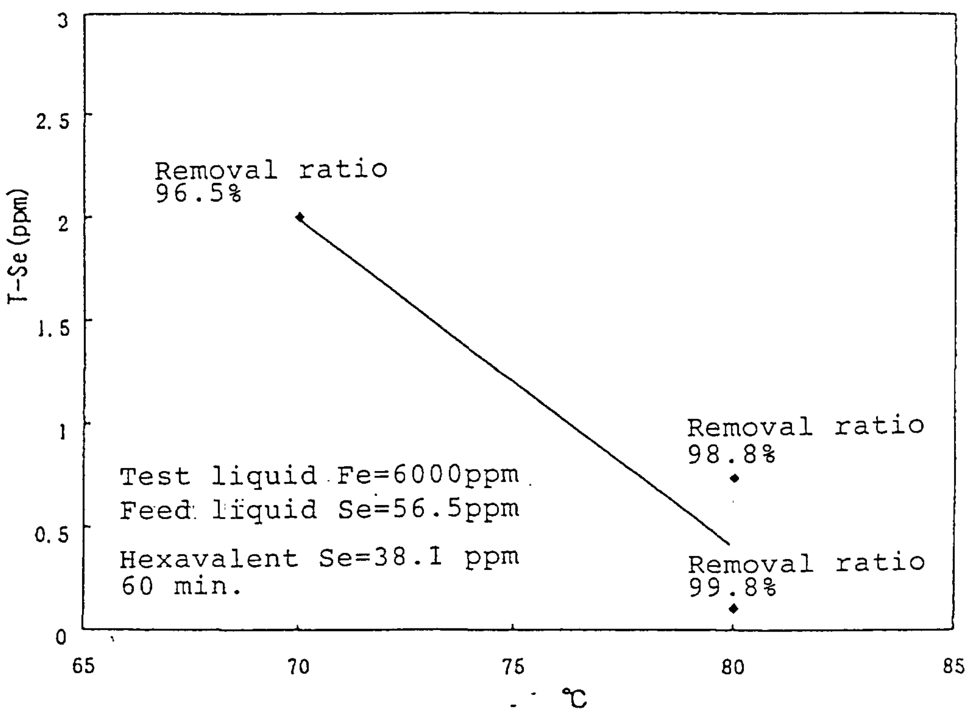

# FIGURE 5

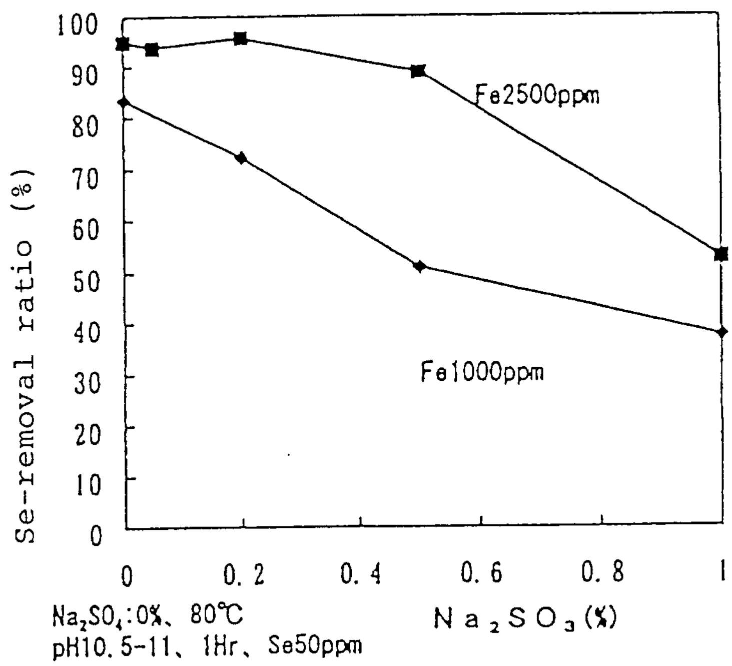


# FIGURE 6

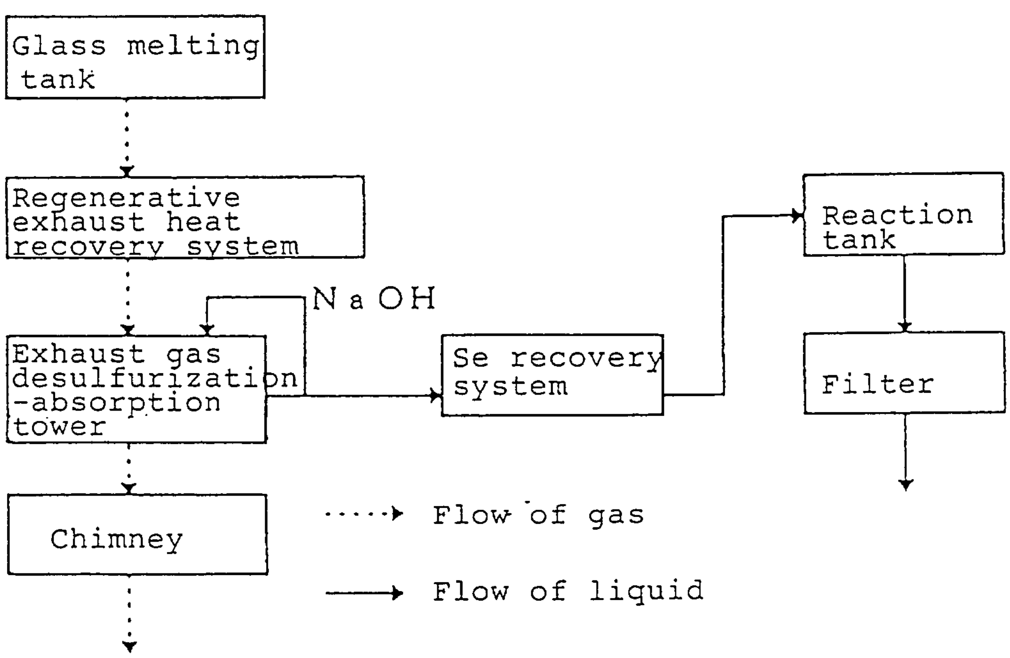

# FIGURE 7

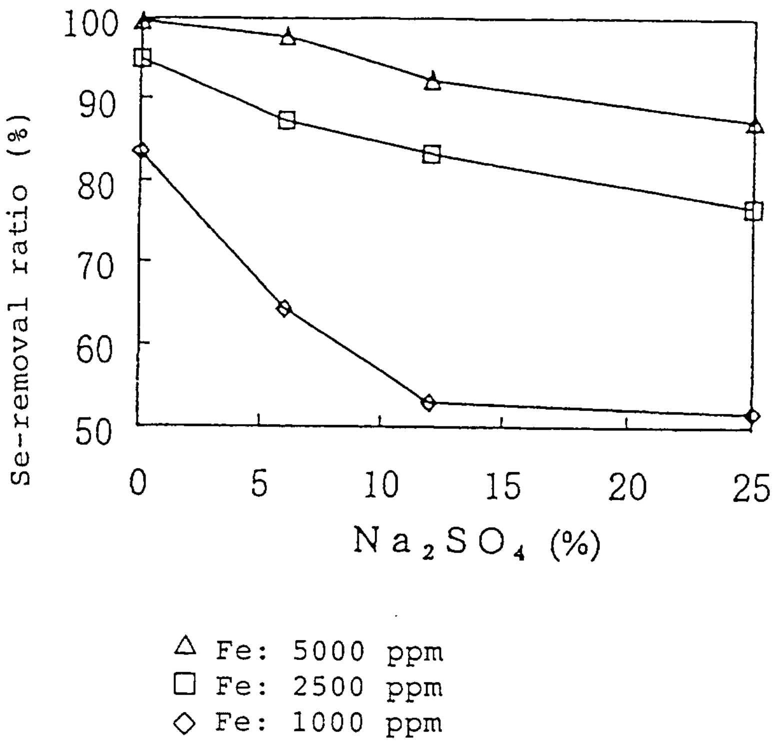

Se-removal ratio (%)
100
90
80
70
60
50
0
5
10
15
20
25
Na2SO4 (%)
△ Fe: 5000 ppm
□ Fe: 2500 ppm
◇ Fe: 1000 ppm